## Europäisches Patentamt
## European Patent Office
## Office européen des brevets

(19)

(11) Publication number: **0 086 624**
A1

(12)

# EUROPEAN PATENT APPLICATION

(21) Application number: 83300650.5

(22) Date of filing: 09.02.83

(51) Int. Cl.³: **A 47 J 37/08**, G 05 D 23/19

(30) Priority: 10.02.82 GB 8203888

(43) Date of publication of application: 24.08.83
Bulletin 83/34

(84) Designated Contracting States: **AT BE CH DE FR GB IT LI LU NL**

(71) Applicant: **MORPHY-RICHARDS LIMITED, Mexborough South Yorkshire S64 8AJ (GB)**

(72) Inventor: **Gol, George, 67 West Street, Helpston Peterborough (GB)**
Inventor: **Lynch, Paul Patrick, 18 Crowson Way, Beeping St James Peterborough (GB)**
Inventor: **Meek, Robert Anthony, 2 Moffop Drive, Langtoft Peterborough (GB)**

(74) Representative: **Pritchard, Colin Hubert et al, Mathys & Squire 10 Fleet Street, London EC4Y 1AY (GB)**

(54) **Electric toaster.**

(57) An electric toaster having a bread carriage which is movable from a rest position to a toasting position at the beginning of a toasting cycle. When moved to the toasting position, the carriage closes a switch which energises heating means. A voltage is then supplied to a power supply unit for a control circuit containing an oscillator (0) and a counter (C). The oscillator generates a sequence of pulses whose frequency is varied to compensate for changes in the supply voltage or changes in temperature at a location in the toaster remote from the heating means or, by means of a manually operable control, to suit the degree of browness required for the toast. Pulses from the oscillator are applied to the counter. When a predetermined count is reached, the counter provides an output which causes the carriage to be released from the toasting position and returned to the rest position.

ACTORUM AG

## Electric Toaster

This invention relates to electric toasters.

A known electric toaster includes a bread carriage which is movable between an operative position, in which one or more slices of bread are supported adjacent electric heating means, and a rest position, in which the bread is moved out of the proximity of the heating means. An electric switch is closed to energise the heating means when the carriage is moved into the operative position and the toaster is connected to an electrical supply. The carriage is held in the operative position against a spring bias. It is released and moved to the rest position and the switch is opened at the completion of the toasting process.

A difficulty which is frequently experienced with such toasters is that they tend to give inconsistent results, so that when a toasting operation is repeated the bread can often be toasted to a different degree of "browness", even when slices from the same loaf are used.

According to the invention an electric toaster comprises electric heating means, a bread carriage which is movable into an operative position in which the carriage supports a slice of bread adjacent to the heating means, an electric switch arranged to be closed for energising the heating means when the carriage is moved into the operative position and the toaster is connected to an electrical supply, means for holding the carriage in the operative position against the action of a biasing means, means operable at the completion of toasting to release the carriage, whereby the biasing means urge the carriage out of the operative position to a position where the bread is out of proximity to the heating means and the switch is opened, means for generating a sequence of pulses, the generating means being energised upon energisation of the heating means, and an electric counter responsive to said pulses

0086624

and arranged to generate a terminating signal after receipt of a predetermined number of pulses, the release means being operable in response to the termination signal, the repetition frequency of the pulses or the predetermined number of pulses received by the counter prior to generation of the termination signal being varied to compensate at least in part for variations in the voltage of the electrical supply or the ambient temperature at a location within the toaster remote from the heating means, or, by adjustment of a manual control, to suit the degree of browness required for the toast.

It will be seen that by appropriately regulating the frequency of the pulses generated in dependence upon the supply voltage and upon the ambient temperature, the length of toasting time can be controlled to compensate for changes in these parameters, giving a more consistent toasting operation.

By providing manually operable means for selectively adjusting the repetition frequency of the pulses, or in some instances the number of pulses at which the counter generates the terminating signal, the degree of toasting can be varied to suit the users requirements, depending upon the nature of the bread being toasted, and the degree of browness required.

The holding means is conveniently in the form of an electromagnet which is energisable automatically on closure of a switch when the bread carriage is moved into the operative position, so as to hold the carriage in that position against the biasing means, and is de-energised at the cessation of a toasting operation, in response to a terminating signal, which thereby effects the release of the carriage and allows it to return to a rest position with the toasted bread out of the proximity of the heating means.

It will, of course, be understood that the statement that the bread is out of proximity with the heating means does not necessarily mean that the bread lies completely clear of the heating elements of the toaster when pushed into this position, but that it is not in a toasting position in which it is in close proximity with the heating elements over substantially the whole of its surface.

For example in the case of a toaster having at least one slot in the top of a surrounding casing for the insertion of the bread and in which the bread carriage is arranged to be moved downwards within the casing to carry the bread to a toasting position fully contiguous with the heating means, the bread carriage need only raise the bread for a sufficient distance to enable it to be removed from the toaster at the completion of a toasting operation.

Conveniently the toaster incorporates means for giving an audible and/or visual warning, at or immediately preceding the completion of a toasting operation.

The initiation of the warning signal just before the toasting operation has been completed can readily be effected in a toaster in accordance with the invention, by arranging for the counter to generate an appropriate control signal a predetermined number of pulses prior to the generation of the terminating signal.

The pulse producing circuit and electronic counter are preferably located adjacent the base of the toaster, preferably at one end, so as to remain at a relatively uniform temperature in use of the toaster. Openings in a part of the casing which houses the pulse producing circuit, the electronic counter and associated components may be provided to allow air to flow over them by convection for cooling purposes in use of the toaster.

The counter is conveniently arranged to be reset automatically to zero either at the completion of a toasting operation, in readiness for the next, or at the commencement of each toasting operation.

The invention will now be described, by way of example, with reference to the accompanying drawings, in which;

Figure 1 is a perspective view of a toaster according to the invention;

Figure 2 is a fragmentary sectional side elevation of the toaster shown in Figure 1;

Figure 3 is a block diagram showing the main parts of an electronic circuit in the toaster of Figure 1; and

Figure 4 shows in more detail the parts of the electronic circuit featured in Figure 3.

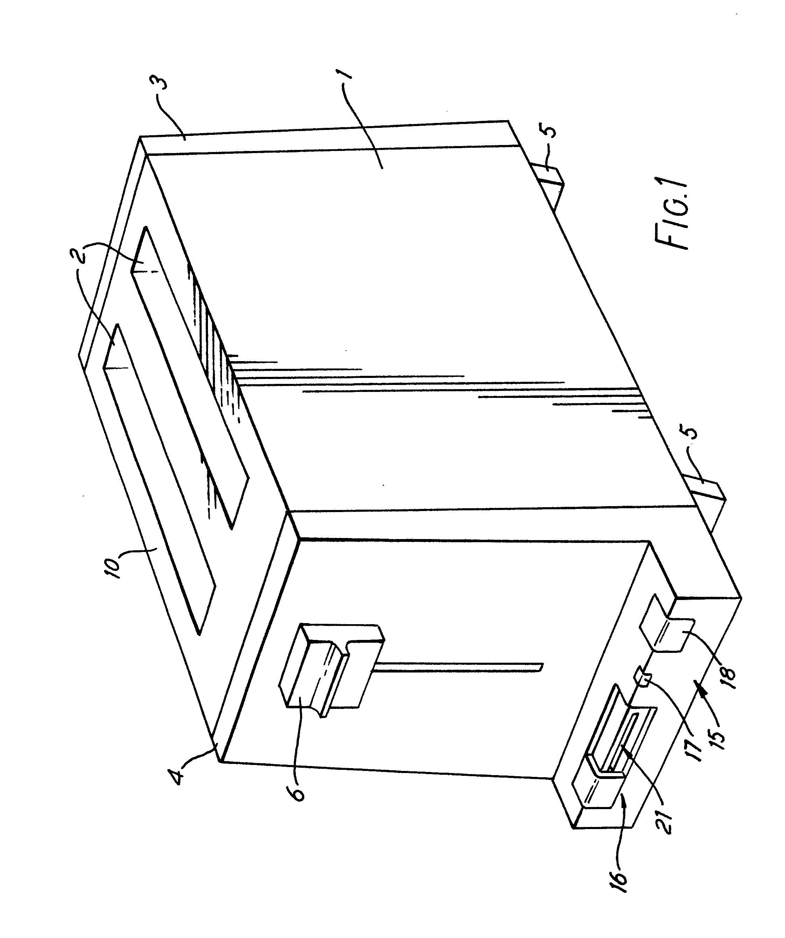

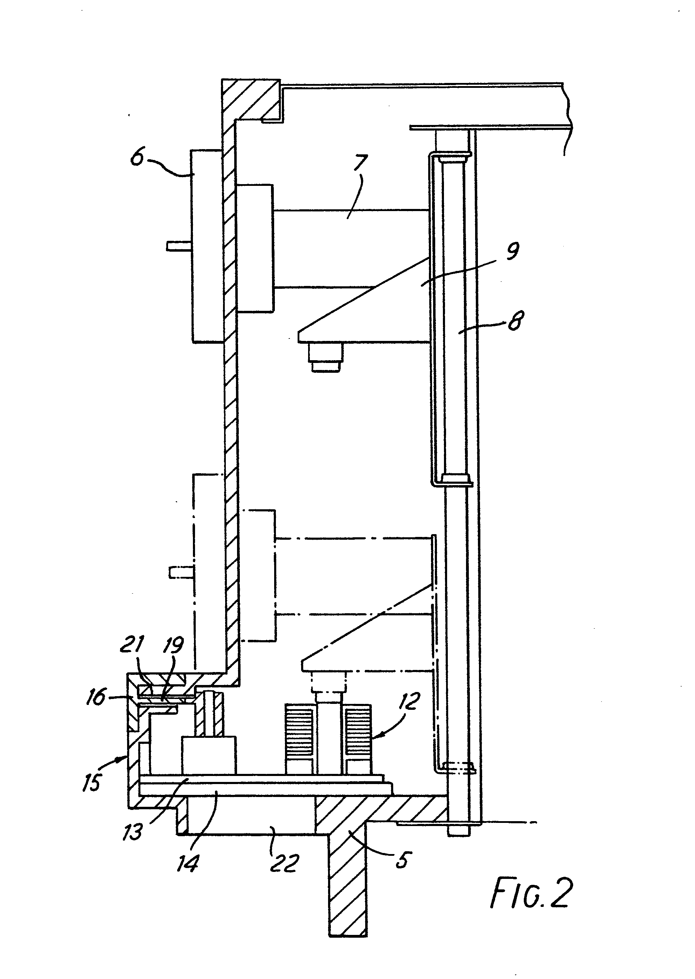

Referring to Figures 1 and 2 of the drawings, the electric toaster has an external casing 1 which has a top panel 10 formed with two slots 2 for receiving bread to be toasted, two end panels 3 and 4, and a base 5. A bread carriage (not shown) is provided within the casing 1 for movably supporting the bread on its insertion and during toasting, when it is in a downward operative position adjacent suitable heating elements (not shown).

The bread carriage is biased upwards towards a rest position by a spring bias (not shown). A knob 6 is connected to one end of the carriage via an extension arm 7 to enable a user to move the carriage downwards into the toasting position against the action of the spring bias. The carriage is guided during its travel between its upper and lower positions by means of a vertical guide pillar 8. At one end of the carriage there is an extension bracket 9, which carries an armature 11 of an electromagnetic device. A coil 12 and mounting of the electromagnet are fixed to the base 5 through a printed circuit board (PCB) 13, which is mounted on spacing ribs 14 forming part of the base moulding. Upper and lower locations of the extension arm 7 with its knob 6, the extension bracket 9, the armature 11 are shown in Figure 2, the lower position being shown chain-dotted. On lowering the bread carriage, the heating means within the toaster are energised to initiate a toasting operation as will be subsequently described.

Projecting from the end of the toaster where the electromagnetic device and the PCT 13 are located is a housing 15 which carries a linear browning or colour control 16, an LED unit 17 and a push button operated override switch 18. The linear colour control 16 is linked to an associated resistor on the PCB via a longitudinal arm 19, which passes through a horizontally disposed clearance slot 21 conveniently situated in that plane to minimise penetration of crumbs and other foreign matter which might adversely affect its operation. The switch 18, not shown in detail but whose function will be later described, comprises a pivoted spring loaded push button acting in co-operation with a touch control whose contacts form part of the circuit of the PCB 13. The LED unit 17 is also connected to the PCB 13.

Location of the PCB 13 in the lower extremity of the toaster casing ensures its operation at the lowest possible running temperature within the toaster. To further assist in maintaining this relatively cool situation, slots 22 are provided in the base 5 to initiate convection air current from outside the toaster. The arrangement of the housing 15 and its associated controls also help to ensure having the user operated devices relatively cool to the touch.

Retention of the bread carriage in its lower toasting position is achieved by the electromagnetic device once the carriage has been moved downwards and the armature 11 and its associated coil 12 have come together. The degree of toasting is then a function of the time the carriage is held down. To this end, a control circuit is provided which is designed to take into account variations in ambient temperature, supply voltage, bread condition and desired toast browness in arriving at a suitable period for achieving the correct degree of toast browness. At the end of that period, current to the coil 12 of the electromagnetic device is cut off, the coil 12 de-energised, and the carriage is returned to its upper position by the spring bias. The heating means are also de-energised.

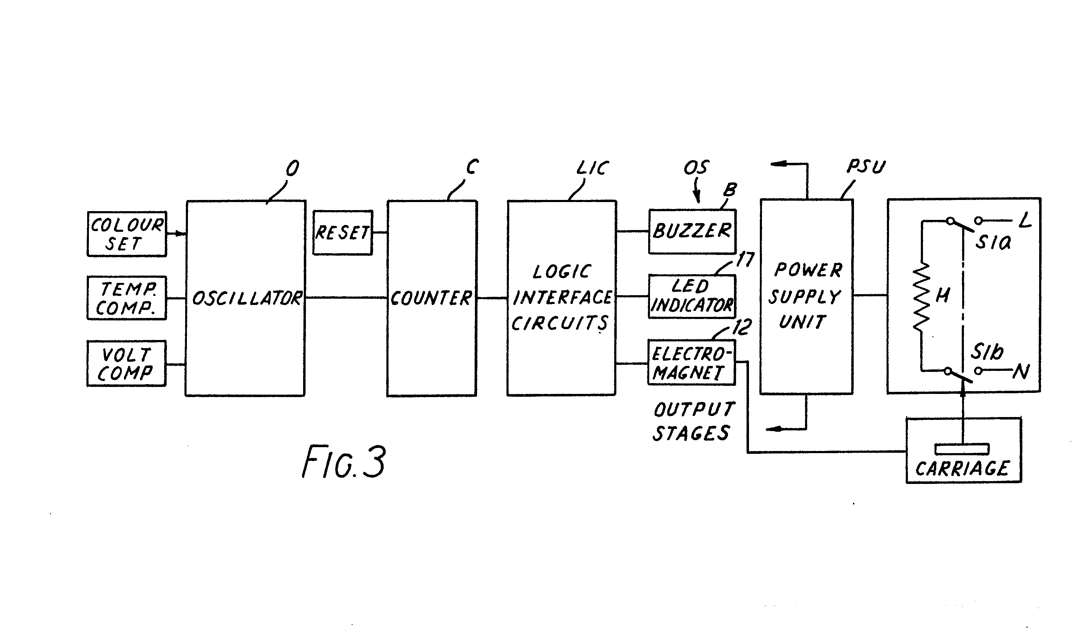

With reference to Figure 3, broadly the control circuit comprises a pair of normally open ganged switches S1a and S1b located respectively in the live L and neutral N lines of an alternating electrical mains supply for heating elements H of the heating means. These switches Sla and Slb are closed automatically to effect energisation of the circuit when the bread carriage is urged down to the toasting position, a circuit being made to the heating elements H to effect toasting. Once the toasting period has been completed, and in consequence the electromagnetic device de-energised, the bread carriage is automatically returned to its upper position by the spring bias. In so doing the switches Sla and Slb are opened to de-energise the heating elements H. A single tapping on the elements H is connected to a power supply circuit PSU, which produces a low DC voltage for the electronic parts of the control circuit.

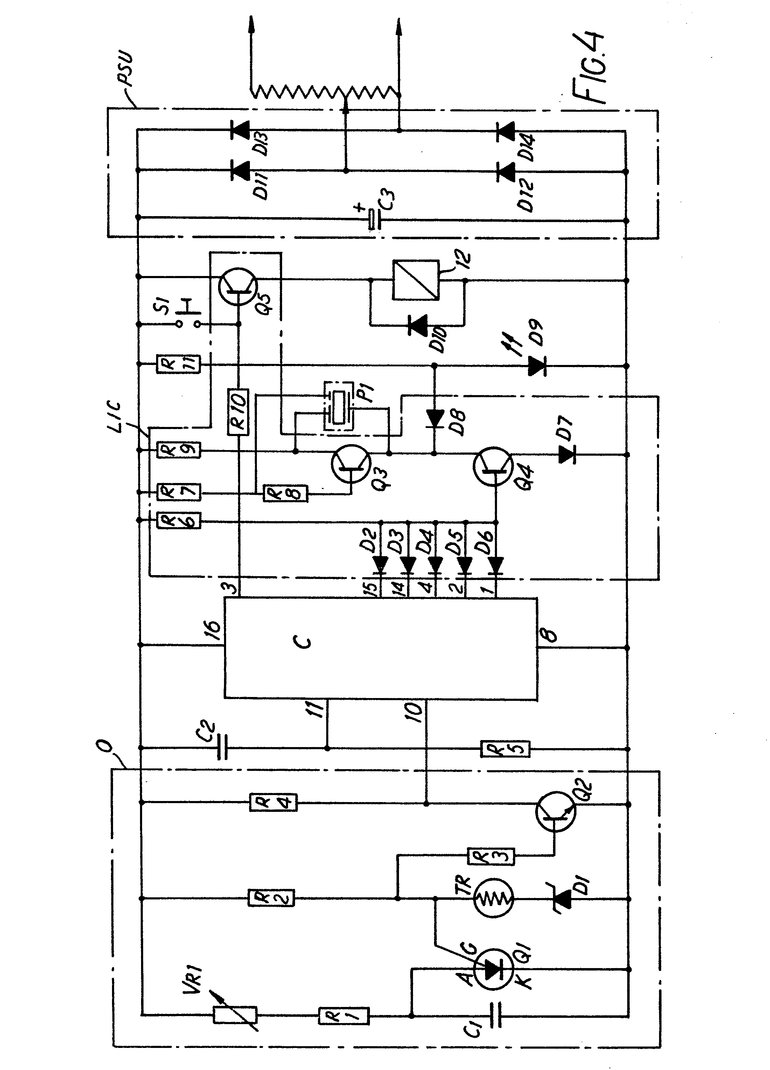

The rest of the control circuit of Figure 3 comprises mainly four sections, ie. an oscillator O,and associated controls, a counter C, logic interface circuits LIC, and output stages OS. These sections are illustrated in more detail in Figure 4.

In general the oscillator O of Figure 3 is designed to generate pulses at a frequency whose nominal period can be set by the linear colour control 16, which adjusts a variable resistor VR1. The oscillator O is a relaxation oscillator which generates pulses at a frequency dependent on rail voltage, which varies directly with the electrical supply voltage, and also, by virtue of a negative temperature coefficient thermistor TR, on the temperature within the toaster. The pulses from the oscillator O are fed to the electronic counter C and after a predetermined pulse count the output of the counter changes state. This change in state de-energises the coil 12 of the electromagnetic device, releasing the bread carriage and terminating the toasting operation.

It will be appreciated that not only can the toasting period be varied manually to obtain a selected degree of browness of the toast, but the circuit also alters the toasting period automatically to compensate for changes in the supply voltage and in the temperature within the toaster, to give a substantially consistent browning of the toast on successive operations of the toaster, for a given manual setting of the colour control 16.

Referring more particularly to Figure 4, the power supply circuit PSU is formed of a full wave bridge rectifier, incorporating four diodes D11 - D14, and a smoothing capacitor C3. An input to the circuit PSU is connected to a tapping on the heating elements H, and an output from the circuit provides the low DC supply voltage for the electronic parts of the control circuit as previously described.

The oscillator O includes a programmable unijunction transistor (PUT) Q1 having a cathode connected to a negative line of the low voltage supply, an anode connected to the junction between a capacitor C1 and a resistor R1, which are themselves connected in series with the variable resistor VR1 between the positive and negative lines, and a gate connected to the junction between a resistor R2 and the thermistor TR, themselves connected in series with a zener diode D1 between the supply lines. A buffer circuit made up of resistors R3 and R4 and a transistor Q2 serves to couple the oscillator O to a clock input to the counter C.

The counter C is conveniently a 14 bit binary counter. Associated with the counter C is a resetting circuit formed of a capacitor C2 and a resistor R5.

At the output of the counter C, a pin 3 is connected via a resistor R10 to the base of a transistor Q5, which has a collector connected to the negative supply line via the coil 12 of the electromagnetic device and an emitter connected to the positive supply line. An override switch S1, corresponding to the switch 18, above, is connected in parallel with the transistor Q5 and a diode D10 is connected in parallel with the coil 12.

A light emitting diode D9 is connected via a diode D8, a NAND circuit formed of a transistor Q4, a diode D7 and a resistor R6,

- 8 -

0086624

and diodes D2, D3, D4, D5 and D6 to respective pins 15, 14, 4, 2 and 1 of the counter C. An audible warning device P1, such as a buzzer and an associated enabling circuit consisting of a transistor Q3 and resistorsR7,R8 andR9 is connected to pins 15, 14, 4 2 and 1 of the counter via the NAND gate.

When the toaster is switched on by moving the bread carriage downwardly into the toasting position, the switches Sla and Slb are closed and current is supplied to the heating elements H. A voltage is applied from the tapping on the elements H to the power supply unit PSU, and a voltage from the output of the unit appears on the supply lines to the oscillator O, the counter C and the logic interface circuits LIC.

Once the voltage on the supply lines is established, the capacitor C2 is charged up and a voltage is applied from the capacitor to reset the count in the counter C to zero.

In the oscillator O, the capacitor C1 charges up through the variable resistor VR1 and the resistor R1 and the voltage on the anode A of the PUT Q1 increases. When the anode voltage rises to a level which is just above the voltage on the gate G, the PUT Q1 is turned on, thereby short circuiting the capacitor C1. This allows the capacitor to start charging again, thereby repeating the above procedure and so producing output pulses which are fed as clock pulses via the buffer circuit to the counter C.

By manually adjusting the resistor VR1 the pulse frequency is altered and the toasting period varied, as above described.

The voltage on the gate G of the PUT Q1 is determined by the resistance of the thermistor TR and the zener diode D1. These components set a reference voltage, and because the thermistor TR has a negative temperature coefficient this reference voltage is temperature dependent. Thus, when the thermistor TR is cold its resistance is high so that the voltage on the gate G of the PUT Q1 is high and the frequency of the pulses from the oscillator O is low.

When the thermistor is hotter its resistance falls so that the voltage on the gate G is lower and the pulse frequency is higher.

Voltage compensation is provided by means of the zener diode D1. Assuming the resistance of the thermistor TR does not change, the voltage on the gate G of the PUT Q1 remains constant even when the DC supply voltage increases or decreases due to variations in the supply voltage to the toaster. However, the rate at which the capacitor C1 charges increases with an increase in the supply voltage and decrease with a decrease in the supply voltage. This allows the PUT Q1 to turn on quicker or slower respectively giving a faster or slower clock input to the counter C.

Once the counter has been re-set at switch-on, the output on pin (3) is low, switching on the transistor Q5, which in turn energises the coil 12 of the electromagnetic device. The device then holds the carriage in the toasting position.

During an initial part of the toasting cycle, the transistor Q4 is cut-off. The light emitting diode D9 is energised and emitting light. Towards the end of the toasting cycle, when a predetermined count has been reached, a series of output pulses is applied from one or other of the pins 1, 2, 4, 14 and 15 of the counter C via the "NAND" gate to the transistor Q4. The pulses cause the transistor Q4 to switch on and off a number of times.

When the transistor Q4 is 'ON' the LED D9 is extinguished and the circuit constituted by resistors R7, R8 and R9 and the transistor Q3 is enabled, thus causing the audible warning device P1 to be enabled. When the transistor Q4 is 'OFF' the LED D9 is energised and the audible warning device P1 is de-energised. By utilising appropriate outputs from the counter, ie. those shown connected through diodes D2 to D6 to the "NAND" gate, the audible warning device P1 is caused to sound eight times just before the end of the toasting cycle. The diode D8 stops the LED D9 lighting when the audible warning device P1 sounds.

On completion of the toasting cycle the output voltage on the pin 3 of the counter C goes high, switching off the transistor Q5 and so de-energising the coil 12. This releases the toaster carriage which is moved upwards to the rest position by the spring bias, thereby causing switches S1a and S1b to open and cutting off the supply to the heater elements H and to the electronic circuitry. The diode D10 is a fly-wheel diode which limits the inductive 'spike' when the coil 12 is switched off.

Variation in temperature within the toaster is brought about largely by the number of successive toasting operations carried out, but can also be affected by the nature of the bread inserted, for example whether it is fresh or frozen, and the thermistor TR is preferably, therefore, located at a position so as to be in close proximity to the bread.

The optimum toasting periods required for obtaining consistent browning of the toast, can be ascertained by experiment or trial for any particular toaster, and the circuit components can readily be selected to obtain frequency variations giving substantially the desired toasting periods for repeated toaster operations.

If it is required to terminate a toasting operation manually prior to completion this can be effected by depressing the button-operated switch 18 (switch S1 in Figure 4). This switches off the transistor Q5 so that the coil 12 is de-energised the bread carriage is released and returns to its upper position by the spring bias. At the same time, the switches S1a and S1b are opened, so de-energising the heating elements H and consequently the electronic circuitry.

CLAIMS

1.      An electric toaster comprising electric heating means, a bread carriage which is movable into an operative position in which the carriage supports a slice of bread adjacent to the heating means, an electric switch arranged to be closed for energising the heating means when the carriage is moved into the operative position and the toaster is connected to an electrical supply, means for holding the carriage in the operative position against the action of a biasing means, means operable at the completion of toasting to release the carriage, whereby the biasing means urge the carriage out of the operative position to a position where the bread is out of proximity to the heating means and the switch is opened, means for generating a sequence of pulses, the generating means being energised upon energisation of the heating means, and an electric counter responsive to said pulses and arranged to generate a terminating signal after receipt of a predetermined number of pulses, the release means being operable in response to the termination signal, the repetition frequency of the pulses or the predetermined number of pulses received by the counter prior to generation of the termination signal being varied to compensate at least in part for variations in the voltage of the electrical supply or the ambient temperature at a location within the toaster remote from the heating means, or, by adjustment of a manual control, to suit the degree of browness required for the toast.

2.      A toaster as claimed in claim 1, wherein the generating means has a power supply unit which supplies the generating means with a supply voltage whose magnitude varies directly with the magnitude of the voltage of the electrical supply for the heating means, and the repetition frequency of the pulses generated by the generating means is dependent upon the supply voltage from the power supply unit.

3. A toaster as claimed in claim 2, wherein the generating means includes a capacitor which, in use, is charged to a predetermined level and then discharged, the repetition frequency of the pulses is dependent upon the frequency at which the capacitor is charged and discharged, the capacitor is coupled to a supply rail from the power supply unit, and the rate at which the capacitor is charged by current from the power supply unit via the supply rail varies with the magnitude of the supply voltage on the supply rail.

4. A toaster as claimed in claim 1, wherein the generating means includes a capacitor which, in use, is charged to a predetermined level and then discharged, the repetition frequency of the pulses is dependent upon the frequency at which the capacitor is charged and discharged, the capacitor is coupled to a thermistor, and the predetermined level to which the capacitor is charged varies with the resistance of the thermistor.

5. A toaster as claimed in claim 1, wherein the generating means includes a capacitor which, in use, is charged to a predetermined level and then discharged, the repetition frequency of the pulses is dependent upon the frequency at which the capacitor is charged and discharged, and the rate of charging of the capacitor is dependent upon the setting of a variable resistor, which setting is adjusted by a user to suit the degree of browness required for the toast.

6. A toaster as claimed in any one of the preceding claims, wherein a visual indicator is coupled to the counter and is energised during at least part of the toasting period.

7. A toaster as claimed in claim 6, wherein the visual indicator is caused to be de-energised and then re-energised a predetermined number of times, commencing shortly before the end of the toasting period.

8. A toaster as claimed in any one of the preceding claims, wherein an audible warning device is coupled to the counter and is caused to be energised and then de-energised a predetermined number of times, commencing shortly before the end of the toasting period.

FIG.1

FIG.2

FIG.3

0086624

0086624

FIG.4

0086624

European Patent Office

**EUROPEAN SEARCH REPORT**

Application number

EP 83 30 0650

## DOCUMENTS CONSIDERED TO BE RELEVANT

| Category | Citation of document with indication, where appropriate, of relevant passages | Relevant to claim |
|---|---|---|
| X | FR-A-2 483 725 (RAWE) <br> * Whole document * | 1-5 |
| A | US-A-4 222 037 (SCHAAP et al.) <br><br> * Whole document * | 1,6,7, 8 |
| A | FR-A-2 380 680 (ROWENTA) | |

**CLASSIFICATION OF THE APPLICATION (Int. Cl. 3)**

A 47 J 37/08
G 05 D 23/19

**TECHNICAL FIELDS SEARCHED (Int. Cl. 3)**

A 47 J
G 05 D
H 05 B
H 03 K

The present search report has been drawn up for all claims

| Place of search | Date of completion of the search | Examiner |
|---|---|---|
| THE HAGUE | 17-05-1983 | SCHARTZ J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82